# FASCICULE DE BREVET EUROPEEN

(11) **EP 3 215 825 B1**
(45) Date de publication et mention de la délivrance du brevet: **17.02.2021**
(21) Numéro de dépôt: 15801899.4
(22) Date de dépôt: 06.11.2015
(51) Int. Cl.: G01N 19/04, G01M 5/00

(54) **DISPOSITIF DE TESTS EN PELAGE**
SCHÄLTESTVORRICHTUNG
PEELING TEST DEVICE

(30) Priorité: 06.11.2014 FR 1460741
(43) Date de publication de la demande: 13.09.2017
(73) Titulaire: SAFRAN AIRCRAFT ENGINES, 75015 Paris (FR)
(72) Inventeur: BROSSIER, Pascal, Noël, F-77550 Moissy Cramayel (FR); BERRANGER, Thibault, F-77550 Moissy Cramayel (FR); CHICHERY, Emmanuel, F-77550 Moissy Cramayel (FR); GANI, Léa, F-77550 Moissy Cramayel (FR); TIMON, Alain, F-77550 Moissy Cramayel (FR)
(74) Mandataire: Ernest Gutmann - Yves Plasseraud S.A.S.
(86) Numéro de dépôt international: PCT/FR2015/053004
(87) Numéro de publication internationale: WO 2016/071649

(56) Documents cités:
- WO-A2-2008/142538
- DE-A1- 1 948 897
- DE-A1-102011 050 708
- DE-U1- 9 013 935
- DE-U1- 9 017 803
- GB-A- 1 346 761
- JP-A- S60 222 749
- US-A- 5 317 925
- US-A1- 2012 103 081
- US-B1- 8 215 181

## Description

L'invention se rapporte à un dispositif de test en pelage innovant, particulièrement adapté au tests d'éprouvettes issues d'aubes. Par ailleurs, l'invention concerne également un procédé de mise en oeuvre d'un tel dispositif de test.

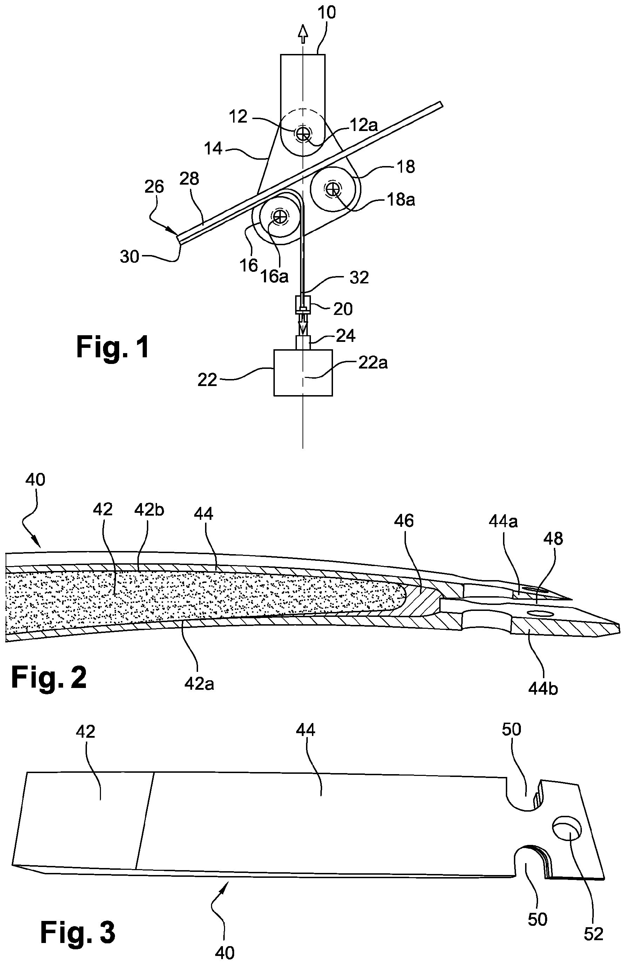

On décrit ci-après, en référence à la figure 1, un dispositif de tests en pelage comprenant son éprouvette de test, déjà connu, conformément aux préconisations énoncées par la norme NF EN 1464.

Ainsi, selon l'état connu de la technique, un dispositif de tests en pelage comprend un bâti 10 auquel est suspendu autour d'une liaison pivot 12 d'axe horizontal 12a un pendule 14 comprenant un rouleau de front 16 et un rouleau de guidage 18, d'axes respectifs 16a et 18a parallèles à l'axe 12a. L'angle entre les directions (16a; 18a) et (18a; 12a) est de 90°. Les distances [16a ; 18a] et [18a ; 12a] valent chacune 33 mm.

Des moyens d'accrochage 20 sont disposés sous le pendule 14 et sont reliés à des moyens de traction 22 configurés pour tracter les moyens d'accrochage 20 vers le bas verticalement, selon une direction 22a passant par l'axe pivot 12a. Entre les moyens d'accrochage 20 et les moyens de traction 22 sont intercalés un capteur de force 24 pouvant mesurer la force de traction mise en œuvre entre les moyens de traction 22 et les moyens d'accrochage 20, c'est-à-dire la force de traction vers le bas des moyens d'accrochage 20.

Une éprouvette 26 est utilisée. Celle-ci comprend un support 28 de forme plate et rectangulaire, et un adhésif 30 collé sur une surface du support 28. L'éprouvette est positionnée sur les deux rouleaux 16, 18 de front et de guidage dans sa longueur, l'adhésif 30 vers le bas en appui sur les rouleaux, et une partie d'extrémité 32 de l'adhésif 30 est pré-décollée et est rendue accessible entre les deux rouleaux 16, 18. Les moyens d'accrochage 20, ici des mors, sont accrochés par serrage à l'extrémité 32 de l'adhésif 30.

Pour lancer le test en pelage, on actionne les moyens de traction 22 avec une contrainte de vitesse de déplacement constante, et on relève les valeurs transmises par le capteur de force 24. Lorsque les moyens de traction 22 sont actionnés, l'extrémité 32 de l'adhésif 30 se déforme et est tendue vers le bas. L'adhésif 30 se décolle petit à petit du support 28, suivant un front de pelage, et est entrainé vers le bas tangentiellement au rouleau de front 16, alors que le support 28 se déplace en roulant du rouleau de front 16 au rouleau de guidage 18.

Lors du pelage, le pendule 14 bascule autour du pivot 12 jusqu'à ce que la surface du rouleau de front 16 soit tangente à la direction de traction 22a à la verticale de l'axe pivot 12a.

Parmi les documents se référant à des dispositifs de test en pelage destinés à tester la résistance au pelage d'éprouvettes, on peut citer : DE 90 13 935 U1, DE 10 2011 050708, JP S60 222749, US 8215181, US 5317925 et DE 90 17 03 U1.

Le plus illustratif d'entre eux, DE 90 17 03 U1, divulgue même un tel dispositif de test en pelage, destiné à tester la résistance au pelage d'éprouvettes formées chacune d'un support et d'un adhésif collé sur une surface du support, et comprenant :
- un bâti comprenant un rouleau de front et au moins un rouleau de guidage, d'axes parallèles destinés à maintenir en appui l'éprouvette tout en la guidant en déplacement, tangentiellement aux rouleaux par roulage, lors du test en pelage, au moins un des rouleaux étant réglable en translation par rapport aux autres rouleaux dans une direction perpendiculaire aux axes des rouleaux
- des moyens d'accrochage destinés à s'accrocher avec l'adhésif,
- des moyens de traction reliés aux moyens d'accrochage, configurés pour tracter les moyens d'accrochage dans un sens de traction tangentiel au rouleau de front, et destinés à entrainer le décollage de l'adhésif de la surface du support, et
- des moyens de mesure de la force mise en œuvre par les moyens de traction pour tracter les moyens d'accrochage lors du pelage.

Pourtant, et bien que ce dispositif de test en pelage soit adapté à des éprouvettes réalisées spécifiquement et de géométries simples, il ne convient en revanche pas à des éprouvettes de formes plus complexes, telles que celles présentant des courbures variables pour chacune de leurs faces, des épaisseurs variables, et des faces non parallèles. En effet, afin d'exploiter valablement la totalité des tests de pelage, l'angle de pelage, c'est-à-dire l'angle entre la surface du support où se trouve le front de pelage, et la direction de traction de l'adhésif, doit rester le même pour tous les tests en pelage effectués sur les différentes éprouvettes. Ceci n'est pas possible avec des éprouvettes complexes et variables comme celles évoquées ci-dessus.

Partant de cette constatation, l'invention apporte une solution simple, efficace et économique, permettant d'effectuer des tests en pelage respectant les normes définies, sur des éprouvettes de formes complexes.

A cet effet, elle propose que le dispositif de test en pelage présenté juste avant soit tel que les ou chaque rouleau(x) de guidage possèdent une surface locale, annulaire d'appui externe d'aspect linéaire, afin de réaliser une liaison ponctuelle avec l'éprouvette quelle que soit la position angulaire du rouleau de guidage.

Ce qui précède peut être atteint par exemple lorsque la surface d'appui externe est d'allure ellipsoïdale, par exemple sphérique, ou encore torique. Le rouleau présente sur l'ensemble de son pourtour une surface d'appui permettant d'obtenir une liaison de type ponctuelle avec une surface plane en vis-à-vis.

Cette caractéristique est fonctionnelle et présente un avantage, comme il est expliqué par la suite, en combinaison avec et indépendamment de la caractéristique selon laquelle au moins un des rouleaux est réglable en translation par rapport aux autres rouleaux dans une direction perpendiculaire aux axes des rouleaux.

La possibilité offerte de déplacer au moins un des rouleaux parmi ceux de front ou de guidage par rapport au bâti, permet de modifier le positionnement de l'éprouvette par rapport au bâti avant le commencement du test en pelage ou pendant le test en pelage.

Pour fonctionner, l'éprouvette doit être en appui par sa face comportant l'adhésif sur le rouleau de front. C'est tangentiellement à ce rouleau que l'adhésif est tracté en éloignement du support pour le décoller du support, selon un angle prédéfini par rapport à la surface du support appelé angle de pelage. Ainsi, lors du pelage, l'adhésif se décolle du support et longe le rouleau de front, alors que le support est entrainé en roulement sur les rouleaux. Le test en pelage tend à faire pivoter l'éprouvette autour du rouleau de front. C'est pourquoi les rouleaux de guidages sont fournis pour retenir l'éprouvette dans une orientation constante par rapport au bâti.

Dans un premier cas, l'éprouvette peut être retenue par les rouleaux de guidage par sa face comprenant l'adhésif à peler. Dans ce cas, au moins un rouleau de guidage doit être positionné en aval du front de pelage, c'est-à-dire du côté du front de pelage créé opposé au rouleau de front. L'éprouvette est alors posée sur les rouleaux de front et de guidage.

Dans un deuxième cas l'éprouvette peut être retenue par les rouleaux de guidage par sa face opposée à l'adhésif à peler. Dans ce cas, au moins un rouleau de guidage doit être positionné en amont du front de pelage, c'est-à-dire du même côté du front de pelage créé que le rouleau de front. L'éprouvette est alors logée entre le rouleau de front et les rouleaux de guidage.

Des éprouvettes de courbures respectives différentes, ou d'épaisseurs respectives différentes, en appuis sur des rouleaux non réglables par rapport au bâti, lors de la mise en tension des moyens de traction et de l'adhésif, auraient des orientations respectives différentes les unes des autres dans le plan perpendiculaire aux axes des rouleaux, lors de tests en pelage successifs. Les angles de pelage pour les différents tests seraient donc tous différents, et les tests ne seraient pas comparables les uns avec les autres. Au contraire, en modifiant la position de l'un des rouleaux comme indiqué par l'invention, on peut faire varier l'inclinaison de l'éprouvette. Ceci présente un intérêt évident puisque le réglage en translation des rouleaux permet d'obtenir une orientation des éprouvettes, tangentiellement au rouleau de front, toujours identique. Les différents tests en pelage effectués le sont donc tous selon le même angle de pelage, et sont donc comparables les uns aux autres.

De même, si la courbure de l'éprouvette est variable sur son étendue, on peut également faire varier la position de l'un des rouleaux lors du test en pelage, alors que l'éprouvette s'avance tangentiellement aux rouleaux, afin de conserver le même angle de pelage pendant toute la durée du test.

En effet, un dispositif de tests comme présenté ci-avant offre un avantage lorsqu'une éprouvette possède une face où est collé l'adhésif non parallèle à sa face opposée, et/ou torsadée sur son long. Pour de tels cas de figure, si un des rouleaux de guidage présentait une liaison linéaire avec l'éprouvette, en possédant une surface cylindrique ou tronconique par exemple, d'axe parallèle au rouleau de front, le rouleau de front pourrait ne pas assurer un appui stable sur une telle éprouvette. Au contraire, si l'on forme les rouleaux de guidage afin de réaliser une liaison ponctuelle quel que soit la position angulaire du rouleau, la surface de l'éprouvette comportant l'adhésif pourra rester en appui complet sur le rouleau de front, alors que le reste de l'éprouvette pourra pivoter autour des contacts ponctuels des rouleaux de guidage.

Avantageusement, les moyens d'accrochage comprennent un câble destiné à s'engager autour de l'adhésif de l'éprouvette. Un tel câble peut être à la fois suffisamment fin, souple et résistant, par exemple en kevlar™, ce qui correspond tout à fait aux besoins de flexibilité et de solidité des moyens d'accrochage.

Préférentiellement, le rouleau de front est réglable en translation par rapport au bâti dans une direction parallèle au sens de traction, et un des rouleaux de guidage est réglable en translation par rapport au bâti dans une direction perpendiculaire au sens (donc à l'axe) de traction.

Le rouleau de front est réglable en translation par rapport au bâti dans une direction parallèle au sens de traction afin que le rouleau de front puisse rester tangent au sens de traction même après son réglage, ce qui est nécessaire au bon fonctionnement du dispositif et au respect de la norme de pelage. Partant de cette considération, le fait de permettre à un rouleau de guidage d'être réglable en translation dans une direction perpendiculaire au sens de traction permet de maximiser les possibilités d'orientation de l'éprouvette.

De manière plus précise, le sens de traction est fixe par rapport au bâti, et le rouleau de front est seulement réglable en translation par rapport au bâti dans une direction parallèle au sens de traction. Il est en effet plus sûr de proposer un sens de traction toujours fixe, car dans ce cas il n'y pas de risque que le sens de traction varie au cours des tests. Même s'il reste possible de réaliser un dispositif dans lequel le sens de traction peut être réglable, afin de faire varier l'angle de pelage, un tel dispositif sera beaucoup plus couteux et complexe à réaliser, alors que l'invention telle que décrite plus haute apporte déjà des réponses satisfaisantes aux problématiques de réglage de l'angle de pelage.

Dans un mode de réalisation préféré, le rouleau de front possède une surface cylindrique.

En position de tests, un tel dispositif comprendra avantageusement une éprouvette de forme complexe, par exemple courbée variablement ou régulièrement sur son long, et/ou de faces opposées non parallèles, et/ou d'épaisseur variable, laquelle est en appui par sa surface encollée d'adhésif sur le rouleau de front, selon un plan tangent au rouleau de front qui forme un angle prédéfini avec le sens de traction, de préférence 90°. Cet angle de pelage est très largement utilisé pour les tests en pelage, et permet donc de comparer les tests effectués avec de nombreux autres tests.

Par ailleurs, lorsque l'éprouvette est directement issue d'aubes utilisées dans l'aéronautique par exemple, l'adhésif ne présente pas forcement une extrémité libre facilement préhensible par les moyens d'accrochage du dispositif de tests en pelage. En effet, une telle aube comprend une pale qui équivaut au support de l'éprouvette de tests, et un renfort qui équivaut à l'adhésif de l'éprouvette de tests. Le renfort recouvre en général les parties amont des surfaces d'extrados et d'intrados de la pale, ainsi que le bord d'attaque de la pale. Des coupes sont effectuées dans l'aube renforcée afin d'en extraire ces éprouvettes qui permettent de tester le maintien du renfort sur la pale. En particulier, il est intéressant de tester la résistance au décollage du renfort à partir du bord d'attaque de la pale, car c'est le cas de figure le plus susceptible de survenir lors d'une utilisation fonctionnelle et réelle de l'aube, par exemple lors d'une collision avec un objet provenant de l'amont de l'aube. Comme le renfort ne présente pas de partie préhensible au niveau du bord d'attaque de la pale, et comme il est à la fois collé sur les surfaces d'extrados et d'intrados de la pale, il est actuellement impossible d'effectuer un test de pelage exploitable.

Selon une caractéristique complémentaire, le dispositif de tests précité sera favorablement tel que :
- a) il comprendra en outre une éprouvette formée d'une portion formant support et d'un adhésif collé sur une surface du support, ladite éprouvette étant issue d'une aube, avec ladite dite portion qui est alors formée d'une portion de pale, ou bien,
- b) il comprendra en outre une dite éprouvette de test en pelage, issue d'une dite aube, comprenant elle-même :
   -- une portion de pale de l'aube qui comporte une surface d'intrados, une surface d'extrados, et un bord d'attaque et/ou de fuite, et
   -- un dit adhésif formant un renfort de l'aube et qui recouvrira et sera collé sur au moins une partie de la surface d'intrados, une partie de la surface d'extrados, l'adhésif s'étendant au-delà du bord d'attaque et/ou de fuite de ladite portion de pale,
- le renfort étant fendu sur toute la longueur du bord d'attaque et/ou du bord de fuite, de manière à ce que le renfort soit séparé en deux plaques distinctes l'une de l'autre se faisant face de part et d'autre de la fente au-delà de la portion de pale et de ses bords d'attaque et/ou de fuite,
- au moins une des plaques comprenant en outre, au-delà du bord d'attaque et/ou de fuite de la portion de pale, des moyens d'attache procurant une prise pour les moyens d'accrochage,
- l'éprouvette étant maintenue en appui contre les rouleaux et étant apte à être guidée en déplacement tangentiellement à ces derniers par roulage, et les moyens d'accrochage étant engagés avec les moyens d'attache d'une des plaques de l'éprouvette en appui sur le rouleau de front.

En liaison avec le cas b) ci-dessus, l'invention concerne enfin un procédé d'initialisation d'un tel dispositif de test en pelage comprenant les étapes consistant à :
- régler la position des rouleaux par translation de manière à ce que l'éprouvette, lorsqu'elle est maintenue en appui sur les rouleaux, présente une direction de déplacement tangentiellement au rouleau de front séparée angulairement du sens de traction par un angle de pelage préalablement choisi,
- positionner l'éprouvette en appui contre les rouleaux, de manière à ce qu'une des extrémités de l'adhésif dépasse du rouleau de front du côté où se trouve le sens de traction, et donc les moyens d'accrochage, et
- engager les moyens d'accrochage avec les moyens d'attache de l'éprouvette.

Si nécessaire, en fonction de la forme de l'éprouvette, ce procédé pourra être suivi d'une étape de réglage de la position des rouleaux par translation pendant le test, lors de la traction des moyens d'accrochage et donc du déplacement de l'éprouvette tangentiellement aux rouleau, de manière à ce que l'éprouvette reste tangentielle au rouleau de front selon un plan constant pendant toute la durée du test en pelage.

L'importance de ce que l'éprouvette puisse être issue d'une aube de turbomachine pourra être constatée dans le fait que, grâce à la fente, on aura séparé le renfort en deux plaques distinctes, l'une collée sur la surface d'intrados de la pale, et l'autre collée sur la surface d'extrados de la pale. Chacune de ces plaques conserve toutefois une portion s'étendant au-delà du bord d'attaque de la pale. Cette même portion a en outre été donc préparée de manière à ce qu'elle comprenne des moyens d'attache adaptés aux moyens d'accrochage du dispositif de tests en pelage.

On notera aussi qu'une telle éprouvette est tout à fait adaptée au dispositif de tests en pelage de l'invention décrit plus haut, puisqu'elle pourra avoir une forme complexe, avec des faces non parallèles (les surfaces d'intrados et d'extrados) ainsi qu'une épaisseur et une courbure propres et potentiellement variables, ces particularités étant héritées de l'aube à partir de laquelle on forme l'éprouvette.

Avantageusement, les moyens d'attache comprennent des encoches formées sur des rebords opposés de la plaque. Ces moyens d'attache sont adaptés au câble du dispositif de tests en pelage décrit plus haut, puisque le câble peut être bouclé autour de la portion de plaque dépassant du bord d'attaque de la pale, tout en passant dans les encoches pour assurer une prise fiable. Cette réalisation est particulièrement intéressante car elle permet au câble d'avoir une prise bien répartie sur la plaque.

On pourra, de manière similaire, percer la plaque d'un trou destiné à accueillir une extrémité d'un câble. Dans ce cas, le câble pourra par exemple être sécurisé dans sa position par un verrou épais fixé à son extrémité, et ne pourra donc pas retraverser le trou de la plaque.

La pale comprendra par exemple un composite à matrice organique, et le renfort comprendra par exemple du titane. Ceci correspond aux cas de figure les plus susceptibles d'être rencontrés.

Préférentiellement, les faces d'intrados et d'extrados ne sont pas parallèles, l'épaisseur entre ces faces et leurs courbures respectives étant en outre variables le long de la pale.

Comme déjà évoqué plus haut, de telles éprouvettes sont directement issues d'aubes utilisées dans l'aéronautique, et permettent donc de simuler au mieux leurs comportements.

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figures 1, déjà décrite, est une vue schématique d'un dispositif de tests en pelage selon les propositions de la norme NF EN 1464 ;
- les figures 2 et 3 sont des vues de profil et de face d'une éprouvette de tests en pelage issue d'une aube;
- la figure 4 est un schéma en perspective d'un dispositif de tests en pelage selon l'invention.

Selon les figures 2 et 3, on voit une éprouvette 40 issue d'une aube qui a été coupée selon des plans perpendiculaires à son bord d'attaque. Une telle aube comprend une pale 42, en Composite à Matrice Organique, qui constitue le support d'une éprouvette pouvant être utilisée avec le dispositif de l'invention. Elle comprend aussi un renfort 44, en titane, qui recouvre la partie amont de l'aube, et qui constitue l'adhésif de l'éprouvette. Dans la suite, on se référera à l'éprouvette, en continuant à utiliser la notion de pale pour désigner le support, et la notion de renfort pour désigner l'adhésif. Comme on peut le voir, la pale présente une surface d'intrados 42a, une surface d'extrados 42b et un bord d'attaque 46, qui est dépassé par le renfort 44. Les surfaces d'intrados et d'extrados de l'éprouvette encollées du renfort 44 sont courbées différemment l'une de l'autre, et l'épaisseur de la pale 42 varie entre ces surfaces. Bien que le renfort 44 soit à l'origine formé d'une seule pièce recouvrant la totalité du bord d'attaque 46 de la pale, ainsi qu'une partie de ses surfaces d'intrados et d'extrados, le renfort comprend ici une fente traversante 48 mettant à jour la totalité du bord d'attaque 46 de la pale de l'éprouvette. De cette manière, le renfort 44 est séparé en deux plaques 44a et 44b distinctes se faisant face de part et d'autre de la fente 48 au-delà du bord d'attaque 46. Le renfort 44 s'étend cependant toujours sur toute la largeur de l'éprouvette, même s'il n'est pas présent jusqu'au bord de fuite de la pale 42.

Les plaques 44a et 44b comprennent, entre le bord d'attaque 48 de la pale et son extrémité, des encoches 50 opposées et sensiblement symétriques usinées sur leurs bords latéraux. Ces encoches 50 servent de prises à un câble bouclé que l'on pourra passer dans la fente 48 entre les plaques 44a et 44b, puis engager dans les encoches 50. Alternativement, les plaques 44a, 44b, comprennent au-delà du bord d'attaque 46 des trous 52 respectifs qui pourront aussi servir à assurer une prise ; par exemple en y insérant et bloquant l'extrémité d'un câble.

L'aube ainsi coupée et préparée devient une éprouvette exploitable pour des tests en pelage, car elle comprend un adhésif distinct sur chacune de ses faces, incarné par chaque plaque 44a, 44b, dont une extrémité est dégagée du support, incarné par la pale 42, et présente des moyens d'attache 50, 52 aisément préhensibles.

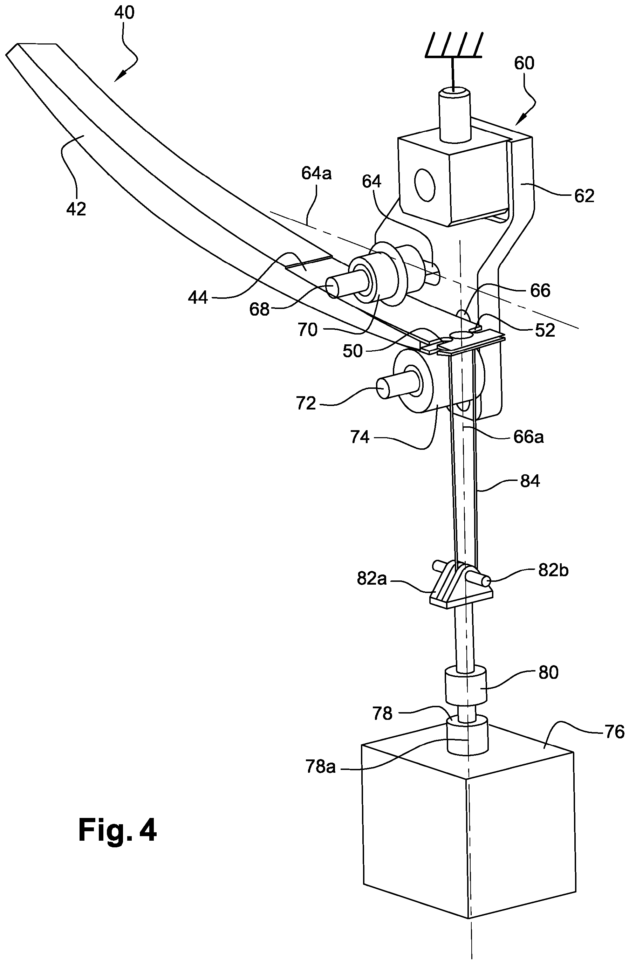

En référence à la figure 4, on décrit maintenant un exemple de dispositif de tests en pelage selon l'invention, comprenant l'éprouvette représentée aux figures 2 et 3. Comme expliqué plus avant, le dispositif de test en pelage selon l'invention peut être utilisé avec une large gamme d'éprouvettes de formes complexes, ou simple, autres que celle ici représentée.

Un bâti 60 est fixé. Ce bâti comprend un mur 62 vertical comprenant deux lumières 64, 66, l'un 64 de forme oblongue avec un grand axe horizontal 64a, et l'autre 66 sensiblement isométrique de grand axe vertical 66a. Les dimensions des deux lumières peuvent toutefois être complètement différentes.

La lumière 64 sert de passage à un arbre 68 perpendiculaire au mur 62, de diamètre correspondant au petit axe de la lumière 64. Cet arbre 68 est réglable en translation dans la lumière 64 dans la direction horizontale du grand axe 64a. Un rouleau de guidage 70 creux est monté sur l'arbre 68 d'un côté du mur 62. Ce rouleau est libre en rotation autour de l'arbre 68. Le rouleau de guidage 70 possède une surface locale annulaire d'appui externe d'aspect linéaire, comme il a été détaillé plus haut dans ce document. Bien que représenté dans la figure comme possédant une surface torique, le rouleau 70 pourrait donc de manière équivalente posséder une surface complètement sphérique par exemple.

La lumière 66 sert de passage à un arbre 72 perpendiculaire au mur 62, de diamètre correspondant au petit axe de la lumière 66. Cet arbre 72 est réglable en translation dans la lumière 66 dans la direction verticale du grand axe 66a. Un rouleau de front 74 creux est monté sur l'arbre 72 du même côté du mur 62 que le rouleau de guidage 70. Ce rouleau de front est libre en rotation autour de l'arbre 72. Le rouleau de front 74 possède une surface cylindrique.

Le rouleau de guidage 70 est, dans toute sa plage de réglage, en translation, décalée horizontalement et verticalement du rouleau de front 74.

Un deuxième mur, non représenté sur les figures, est classiquement fixé en face du premier mur 62 de l'autre côté des rouleaux. Ce deuxième mur comprend des lumières symétriques aux lumières 64, 66 du premier mur 62, dans lesquelles les arbres 68, 72 peuvent prendre en deuxième appui de l'autre côté des rouleaux. Les charges sont ainsi réparties égalitairement sur les arbres de part et d'autres des rouleaux 70, 74, qui subissent des contraintes transversales en fonctionnement. Ceci évite la déformation des arbres.

On trouve sous le bâti 60 des moyens de traction 76 comprenant un vérin 78 vertical, d'axe 78a vertical tangent à la surface du rouleau de front 74, du côté du rouleau de front opposé au rouleau de guidage 70. Un capteur de force 80 est intégré au vérin 78, et mesure la force de traction vertical exercée par le vérin. On notera que le capteur de force peut de manière équivalente être monté n'importe le long de la chaîne de traction. A l'extrémité supérieure du vérin 78 est agencé un ensemble chape 82a et axe 82b. Dans la chape 82a et autour de l'axe 82b est montée une boucle 84 de câble, par exemple en kevlar™, c'est-à-dire en poly(p-phénylènetéréphtalamide).

On a agencé l'éprouvette 40 décrite en référence aux figures 3 et 4 entre le rouleau de guidage 70 et le rouleau de front 74. L'extrémité fendue du renfort 44 dépasse légèrement du rouleau de front 74. La boucle 84 est engagée dans la fente 48 de l'éprouvette et dans les encoches 50, de sorte qu'une des plaques 44b est en prise avec la boucle 84.

La boucle 84 est mise en tension par le vérin 78, et appuie la face inférieure de l'éprouvette 40 contre le rouleau de front 74. L'éprouvette tend alors à pivoter autour du rouleau de front 74, et se plaque par sa face supérieure sur le rouleau de guidage 70. On voit donc bien qu'on fonction de la position relative des deux rouleaux, l'éprouvette n'aura pas la même orientation. En revanche, quel que soit la position du rouleau de front 74 dans la lumière verticale 66, la boucle 84 sera toujours en tension verticalement et tangentiellement au rouleau de front 74.

En fonctionnement, la boucle 84 tire la plaque 44b vers le bas et la décolle de la pale 42. L'éprouvette 40 est libre de se déplacer par roulement le long des rouleaux 70, 74, de sorte que le front de roulage se situe toujours sensiblement à la verticale de la boucle 84. Le test de pelage s'effectue en relevant les données délivrées par le capteur de force 80 alors que le vérin 78 se déplace vers le bas à vitesse constante.

On peut aisément automatiser le déplacement en translation des rouleaux 70, 74 dans les lumières 64, 66, pendant le déplacement du vérin 78, afin qu'en tout temps, selon les variations de courbure et d'épaisseur de l'éprouvette 40, l'orientation de l'éprouvette tangentiellement au rouleau de front 74 soit conservée.

On pourra bien évidemment modifier le système d'attache composé des encoches 50, de la boucle 84, de la chape 82a et de l'axe 82b, par tout autre système d'attache connu et adapté à saisir efficacement l'adhésif de l'éprouvette et à l'entrainer vers le bas.

## Revendications

1. Dispositif de tests en pelage d'éprouvettes (40), le dispositif étant destiné à tester la résistance au pelage de telles éprouvettes (40) formées chacune d'une portion formant support (42) et d'un adhésif (44) collé sur une surface du support, et comprenant :
- un bâti (60) comprenant un rouleau de front (74) et au moins un rouleau de guidage (70), d'axes parallèles destinés à maintenir en appui une dite éprouvette (40) tout en la guidant en déplacement, tangentiellement aux rouleaux par roulage, lors du test en pelage, au moins un desdits rouleaux (70, 74) étant réglable en translation par rapport à l'autre ou aux autres rouleau(x) dans une direction perpendiculaire aux axes des rouleaux,
- des moyens d'accrochage (84, 82a, 82b) destinés à s'accrocher avec l'adhésif (44),
- des moyens de traction (76, 78) reliés aux moyens d'accrochage, configurés pour tracter les moyens d'accrochage dans un sens de traction suivant un axe (78a) tangentiel au rouleau de front (74), et destinés à entrainer le décollage de l'adhésif de la surface du support,
- des moyens de mesure de la force (80) mise en œuvre par les moyens de traction pour tracter les moyens d'accrochage lors du pelage,
**caractérisé en ce que** les ou chaque rouleau(x) de guidage (70) possèdent une surface locale, annulaire d'appui externe d'aspect linéaire, afin de réaliser une liaison ponctuelle avec l'éprouvette quelle que soit la position angulaire du rouleau de guidage (70).

2. Dispositif de tests en pelage selon la revendication 1, **caractérisé en ce que** les moyens d'accrochage (84) comprennent un câble destiné à s'engager autour de l'adhésif (44) de l'éprouvette.

3. Dispositif de tests en pelage selon l'une des revendications 1 ou 2, **caractérisé en ce que** le rouleau de front (74) est réglable en translation par rapport au bâti (60) dans une direction (66a) parallèle à l'axe de traction (78a), et **en ce qu'**un des rouleaux de guidage (70) est réglable en translation par rapport au bâti dans une direction (64a) perpendiculaire à l'axe de traction.

4. Dispositif de tests en pelage selon la revendication 3, **caractérisé en ce que** l'axe de traction (78a) est fixe par rapport au bâti (60), et **en ce que** le rouleau de front (74) est seulement réglable en translation par rapport au bâti dans une direction parallèle au sens de traction.

5. Dispositif de tests en pelage selon l'une des revendications précédentes, **caractérisé en ce que** le rouleau de front (74) possède une surface cylindrique.

6. Dispositif de test en pelage selon l'une des revendications 1 à 5, comprenant en outre une dite éprouvette (40) de test en pelage, issue d'une aube, comprenant :
- ladite portion (42), qui est une portion de pale de l'aube et qui comporte une surface d'intrados (42a), une surface d'extrados (42b), et un bord d'attaque (46) et/ou de fuite, et
- l'adhésif (44) qui forme un renfort de l'aube qui recouvre et est collé sur au moins une partie de la surface d'intrados, une partie de la surface d'extrados, et qui s'étend au-delà du bord d'attaque et/ou de fuite de ladite portion de pale,
le renfort (44) étant fendu sur toute la longueur du bord d'attaque (46) et/ou de fuite, de manière à ce que le renfort soit séparé en deux plaques (44a, 44b) distinctes l'une de l'autre se faisant face de part et d'autre de la fente (48) au-delà de la portion de pale et de ses bords d'attaque et/ou de fuite,
au moins une des plaques comprenant en outre, au-delà du bord d'attaque et/ou de fuite de la portion de pale, des moyens d'attache (50, 52) procurant une prise pour les moyens d'accrochage (84, 82a, 82b),
l'éprouvette étant maintenue en appui contre les rouleaux (70, 74) et étant apte à être guidée en déplacement tangentiellement à ces derniers par roulage, et les moyens d'accrochage (84) étant engagés avec les moyens d'attache (50, 52) d'une des plaques de l'éprouvette en appui sur le rouleau de front (74) .

7. Dispositif de tests en pelage selon l'une des revendications 1 à 5, **caractérisé en ce qu'**il comprend en outre une éprouvette (40) formée d'une portion formant support (42) et d'un adhésif (44) collé sur une surface du support, ladite éprouvette (40) étant issue d'une aube, avec ladite dite portion (42) qui est formée d'une portion de pale.

8. Procédé d'initialisation d'un dispositif de test en pelage selon la revendication 6, comprenant les étapes consistant à :
- régler la position des rouleaux (70, 74) par translation de manière à ce que l'éprouvette (40), lorsqu'elle est maintenue en appui sur les rouleaux, présente une direction de déplacement tangentiellement au rouleau de front (74) séparée angulairement de l'axe de traction (78a) par un angle de pelage préalablement choisi,
- positionner l'éprouvette (40) en appui contre les rouleaux (70, 74), de manière à ce qu'une des plaques (44a, 44b) de l'éprouvette soit en appui sur le rouleau de front (74), et à ce que les moyens d'attache (50, 52) de cette même plaque de l'éprouvette dépassent du rouleau de front du côté où se trouve l'axe de traction (78a), et
- engager les moyens d'accrochage (84) avec les moyens d'attache (50, 52) de l'éprouvette.

## Patentansprüche

1. Vorrichtung für Schälprüfungen von Prüfkörpern (40), wobei die Vorrichtung dazu bestimmt ist, die Schälfestigkeit solcher Prüfkörper (40) zu prüfen, die jeweils aus einem Trägerabschnitt (42) und einem an einer Oberfläche des Trägers aufgeklebten Haftmittel (44) gebildet sind, und enthält:
- ein Gestell (60), das eine Stirnrolle (74) und zumindest eine Führungsrolle (70) mit parallelen Achsen umfasst, die dazu bestimmt sind, einen Prüfkörper (40) in Anlage zu halten und diesen während der Schälprüfung tangential zu den Rollen durch Abrollen führend zu verlagern, wobei zumindest eine der Rollen (70, 74) durch Verschiebung in Bezug auf die weitere bzw. weiteren Rolle(n) in einer zu den Achsen der Rollen senkrechten Richtung verstellbar ist,
- Verhakungsmittel (84, 82a, 82b), die dazu bestimmt sind, sich mit dem Haftmittel (44) zu verhaken,
- Zugmittel (76, 78), die mit den Verhakungsmitteln verbunden und dazu ausgelegt sind, die Verhakungsmittel in einer Zugrichtung entlang einer tangential zur Stirnrolle (74) verlaufenden Achse (78a) zu ziehen, und dazu bestimmt sind, das Ablösen des Haftmittels von der Oberfläche des Trägers zu bewirken,
- Mittel zum Messen der Kraft (80), die durch die Zugmittel aufgebracht wird, um die Verhakungsmittel während des Schälens zu ziehen,
**dadurch gekennzeichnet, dass**
die bzw. jede Führungsrolle(n) (70) eine bereichsweise, ringförmige äußere Stützfläche mit linearem Verlauf aufweist bzw. aufweisen, um unabhängig von der Winkelstellung der Führungsrolle (70) eine Punktverbindung mit dem Prüfkörper herzustellen.

2. Schälprüfungsvorrichtung nach Anspruch 1,
**dadurch gekennzeichnet, dass**
die Verhakungsmittel (84) ein Seil enthalten, das dazu bestimmt ist, um das Haftmittel (44) des Prüfkörpers herumgeführt zu werden.

3. Schälprüfungsvorrichtung nach einem der Ansprüche 1 oder 2,
**dadurch gekennzeichnet, dass**
die Stirnrolle (74) durch Verschiebung bezüglich des Gestells (60) in einer Richtung (66a) parallel zur Zugachse (78a) verstellbar ist, und dass eine der Führungsrollen (70) durch Verschiebung bezüglich des Gestells in einer Richtung (64a) senkrecht zur Zugachse verstellbar ist.

4. Schälprüfungsvorrichtung nach Anspruch 3,
**dadurch gekennzeichnet, dass**
die Zugachse (78a) bezüglich des Gestells (60) fest ist und dass die Stirnrolle (74) nur durch Verschiebung bezüglich des Gestells in einer Richtung parallel zur Zugrichtung verstellbar ist.

5. Schälprüfvorrichtung nach einem der vorangehenden Ansprüche,
**dadurch gekennzeichnet, dass**
die Stirnrolle (74) eine zylindrische Fläche besitzt.

6. Schälprüfungsvorrichtung nach einem der Ansprüche 1 bis 5,
ferner enthaltend einen Prüfkörper (40) zur Schälprüfung, der aus einer Schaufel stammt und enthält:
- den Abschnitt (42), der ein Schaufelblattabschnitt ist und eine Saugseite (42a), eine Druckseite (42b) und eine Anströmkante (46) und/oder eine Abströmkante aufweist, und
- das Haftmittel (44), das eine Schaufelverstärkung bildet, die zumindest einen Teil der Druckseite und einen Teil der Saugseite bedeckt und damit verklebt ist und die sich über die Anströmkante und/oder Abströmkante des Schaufelblattabschnitts hinaus erstreckt,
wobei die Verstärkung (44) über die gesamte Länge der Anströmkante (46) und/oder der Abströmkante geschlitzt ist, so dass die Verstärkung in zwei getrennte Platten (44a, 44b) aufgeteilt ist, die beiderseits des Schlitzes (48) über den Schaufelblattabschnitt und seine Anströmkante und/oder Abströmkante hinaus einander gegenüberliegen,
wobei zumindest eine der Platten ferner über die Anströmkante und/oder die Abströmkante des Schaufelblattabschnitts hinaus Befestigungsmittel (50, 52) aufweist, die eine Angriffsstelle für die Verhakungsmittel (84, 82a, 82b) schaffen,
wobei der Prüfkörper in Anlage an den Rollen (70, 74) gehalten und dazu geeignet ist, tangential zu diesen durch Abrollen geführt verlagert zu werden, und die Verhakungsmittel (84) in Eingriff mit den Befestigungsmitteln (50, 52) einer der Platten des Prüfkörpers in Anlage an der Stirnrolle (74) sind.

7. Schälprüfungsvorrichtung nach einem der Ansprüche 1 bis 5,
**dadurch gekennzeichnet, dass**
sie ferner einen Prüfkörper (40) enthält, der aus einem Trägerabschnitt (42) und einem an einer Oberfläche des Trägers aufgeklebten Haftmittel (44) gebildet ist, wobei der Prüfkörper (40) aus einer Schaufel mit dem Abschnitt (42) stammt, der aus einem Schaufelblattabschnitt gebildet ist.

8. Verfahren zur Inbetriebnahme einer Schälprüfungsvorrichtung nach Anspruch 6, umfassend die folgenden Schritte:
- Verstellen der Position der Rollen (70, 74) durch Verschieben, derart, dass der Prüfkörper (40) dann, wenn er in Kontakt mit den Rollen gehalten wird, eine Verlagerungsrichtung tangential zur Stirnrolle (74) aufweist, die von der Zugachse (78a) um einen vorgewählten Schälwinkel winkelmäßig getrennt ist,
- Positionieren der Prüfkörpers (40) in Anlage an den Rollen (70, 74), derart, dass eine der Platten (44a, 44b) des Prüfkörpers mit der Stirnrolle (74) in Anlage ist und dass die Befestigungsmittel (50, 52) derselben Platte des Prüfkörpers auf der Seite, auf der sich die Zugachse (78a) befindet, aus der Stirnrolle hervorstehen, und
- Ineingriffbringen der Verhakungsmittel (84) mit den Befestigungsmitteln (50, 52) des Prüfkörpers.

## Claims

1. Peeling test device for coupons (40) derived from a vane, wherein the device is designed to test the resistance to peeling of said coupons (40) each formed of a part forming a support (42) and an adhesive (44) glued to a surface of the support and comprising :
- a frame (60) comprising a front roller (74) and at least one guide roller (70), with parallel axes designed to maintain one said the coupon (40) supported while guiding movement of the latter, tangentially to the rollers by rolling, during the peeling test, at least one of the rollers (70, 74) being translationally adjustable in relation to the other rollers in a direction perpendicular to the axes of the rollers
- means of attachment (84, 82a, 82b) designed to be attached with the adhesive (44),
- means of traction (76, 78) linked to the means of attachment, configured in order to pull the means of attachment in a pulling direction along an axis (78a) tangential to the front roller (74) and designed to cause detachment of the adhesive from the surface of the support,
- means of measuring the force (80) exerted by the means of traction in order to pull the means of attachment during peeling,
**characterized in that** the rollers or each roller (70) has(have) an external local annular bearing surface with a linear feature, in order to create a one-off connection with the coupon regardless of the angular position of the guide roller (70).

2. Peeling test device according to claim 1, **characterized in that** the means of attachment (84) comprise a cable designed to engage around the adhesive (44) of the coupon.

3. Peeling test device according to any of claims 1 or 2, **characterized in that** the front roller (74) is translationally adjustable in relation to the frame (60) in a direction (66a) parallel to the pulling axis (78a) and **in that** one of the guide rollers (70) is translationally adjustable in relation to the frame in a direction (64a) perpendicular to the pulling axis.

4. Peeling test device according to claim 3, **characterized in that** the pulling axis (78a) is fixed in relation to the frame (60) and **in that** the front roller (74) is only translationally adjustable in relation to the frame in a direction parallel to the pulling direction.

5. Peeling test device according to any of the above claims, **characterized in that** the front roller (74) has a cylindrical surface.

6. Peeling test device according to any of claims 1 to 5, further comprising one said peeling test coupon (40) derived from a vane, comprising :
- said part (42), which is a blade part of the vane and which comprises a frontside surface (42a), a backside surface (42b) and a leading edge (46) and/or trailing edge and
- the adhesive (44) which forms a vane reinforcement that covers and is glued to at least a part of the frontside surface, a part of the backside surface and which extends beyond the leading and/or trailing edge of said blade part,
the reinforcement (44) being split over the entire length of the leading edge (46) and/or trailing edge of said blade part, such that the reinforcement is separated into two plates (44a, 44b) separate from one another and facing each other on either side of the slit (48) beyond said blade part and the leading and/or trailing edge thereof,
at least one of the plates furthermore comprising, beyond the leading and/or trailing edge of said blade part, fastening means (50, 52) providing a hold for the means of attachment (84, 82a, 82b),
the coupon being held against the rollers (70, 74) and is capable of being guided in movement tangentially in relation to the latter by rolling and the means of attachment (84) are engaged with the fastening means (50, 52) of one of the plates of the coupon resting on the front roller (74).

7. Peeling test device according to any of claims 1 to 5, further comprising a coupon (40) forming a support (42) and an adhesive (44) glued to a surface of the support, the coupon (40) being derived from a vane, with said part formed as a blade part.

8. Method of initializing a peeling test device according to claim 6, comprising stages involving:
- adjusting the position of the rollers (70, 74) by translation such that the coupon (40), when held against the rollers, has a direction of movement tangentially in relation to the front roller (74) separated angularly from the pulling axis (78a) by a previously chosen peeling angle,
- positioning the coupon (40) resting against the rollers (70, 74) such that one of the plates (44a, 44b) of the coupon rests against the front roller (74) and such that the fastening means (50, 52) of this same plate of the coupon project from the front roller on the side on which the pulling axis (78a) is located and
- engaging the means of attachment (84) with the fastening means (50, 52) of the coupon.
